# EUROPÄISCHE PATENTSCHRIFT

(11) **EP 1 138 169 B1**
(45) Veröffentlichungstag und Bekanntmachung des Hinweises auf die Patenterteilung: **20.12.2006**
(21) Anmeldenummer: 99957851.1
(22) Anmeldetag: 02.10.1999
(51) Int. Cl.: H04Q 7/38, H04Q 11/04, H04L 12/28

(54) **TELEKOMMUNIKATIONSSYSTEM UND VERFAHREN ZUR DATENÜBERTRAGUNG**
TELECOMMUNICATION SYSTEM AND METHOD FOR TRANSMITTING DATA
SYSTEME DE TELECOMMUNICATION ET PROCEDE POUR LA TRANSMISSION DE DONNEES

(30) Priorität: 12.12.1998 DE 19857406
(43) Veröffentlichungstag der Anmeldung: 04.10.2001
(73) Patentinhaber: Marconi Communications GmbH, 71522 Backnang (DE)
(72) Erfinder: BRUENLE, Siegfried, D-71573 Allmersbach (DE); FISCHER, Juergen, D-71522 Backnang (DE)
(74) Vertreter: Manitz, Finsterwald & Partner GbR
(86) Internationale Anmeldenummer: PCT/DE1999/003200
(87) Internationale Veröffentlichungsnummer: WO 2000/036864

(56) Entgegenhaltungen:
- EP-A- 0 713 347
- EP-A- 0 719 062
- EP-A- 0 732 826
- WO-A-98/24224
- US-A- 5 751 702

## Beschreibung

Die Erfindung betrifft ein Telekommunikationssystem und ein Verfahren zur Datenübertragung.

### Stand der Technik

Für den Datenverkehr, beispielsweise Internetzugriff mittels TCP/IP-Protokoll (Transmission Control Protocol/Internet Protocol) zwischen einer Basisstation eines Netzbetreibers und einer Teilnehmerstation werden auf beiden Seiten der Telekommunikationsverbindung Router eingesetzt, die eine fest zugeordnete Übertragungskapazität, sogenannte Leased Lines von beispielsweise 2 Mbit/s erfordern. Bei der Teilnehmerstation kann es sich dabei um den Kommunikationsanschluß eines Unternehmens oder etwa eines Mehrfamilienhauses handeln. An der Teilnehmerstation können in jedem Falle mehrere analoge oder digitale Geräte zur Sprach- und/oder Datenkommunikation angeschlossen sein. Die Datenübertragung zwischen Basisstation und Teilnehmerstation kann dabei über ein fest verlegtes Kupfer- oder Glasfasernetz oder über eine Funkverbindung erfolgen.

Im Datenverkehr treten jedoch in größerem Ausmaß als im Sprachverkehr Schwankungen des Datenaufkommens auf. Soll beispielsweise eine größere Datei aus dem Internet "heruntergeladen" oder über ein Intranet transportiert werden, so ist eine hohe Übertragungsbandbreite der Telekommunikationsverbindung erforderlich, um die Datenübertragung in einer für den Benutzer akzeptablen Zeit zu ermöglichen. Findet ein solcher Datentransfer gerade nicht statt, so ist die erforderliche Übertragungsbandbreite dagegen niedrig. Bei der Auslegung der Übertragungsbandbreite der Telekommunikationsverbindung sind daher entweder kostspielige Überkapazitäten vorhanden, oder es treten bei starker Beanspruchung Kapazitätsmängel auf.

Aus dem Dokument EP-A-0 732 826 ist ein Funkkommunikationssystem bekannt, bei dem einzelne Funkkanäle auf Anforderung von Teilnehmerstationen gebündelt werden können. Hierzu dient eine zentrale Steuereinheit, die direkt mit der Basisstation gekoppelt ist.

### Vorteile der Erfindung

Das erfindungsgemäße Telekommunikationssystem mit den in Anspruch 1 genannten Merkmalen und das erfindungsgemäße Verfahren zur Datenübertragung mit den in Anspruch 16 genannten Merkmalen weist den Vorteil auf, durch eine veränderliche Übertragungskapazität der einzelnen Übertragungsstrecken eine dynamische Anpassung an den tatsächlich aufkommenden Datenverkehr zu ermöglichen. Dadurch kann eine vorhandene Netzinfrastruktur besser und effizienter ausgenutzt werden und gleichzeitig eine höhere Dienstequalität auch bei starker Beanspruchung sichergestellt werden. Das bedeutet, daß bei einer erhöhten maximalen Datenübertragungsrate pro Teilnehmer gleichzeitig eine größere Anzahl von Teilnehmerstationen mit der Basisstation bedient werden kann.

Die Vorteile werden durch ein Telekommunikationssystem und ein Verfahren zur Datenübertragung mit einer Basisstation, einem der Basisstation zugeordneten Basisstations-Router, mehreren über ein Anschlußnetzwerk mit der Basisstation verbundenen Teilnehmerstationen mit Teilnehmerstations-Routern zum Aufbau einer Telekommunikationsverbindung mit dem Basisstation-Router erreicht, wobei der Basisstations-Router die einer Telekommunikationsverbindung zwischen Basisstation und Teilnehmerstation jeweils zugewiesene variable Übertragungsrate der Datensignale steuert. Der Basisstations-Router übernimmt dabei eine Funktion, die Vermittlungsstationen im Sprachverkehr erfüllen.

Vorzugsweise ist zum Aufbau einer Verbindung zwischen Basisstation und Teilnehmerstation der Basisstations-Router vom. Teilnehmerstations-Router anwählbar. Die Anwahl erfolgt vorzugsweise über einen ISDN-Primärmuliplexanschluß (PRA).

Vorzugsweise ist die Basisstation mit dem Basisstations-Router über eine Schnittstelle mit V5.2-Protokoll verbunden. Eine derartige Schnittstelle erlaubt in vorteilhafter Weise die jeweilige Zuordnung und Zuweisung der Übertragungskapazität zu den einzelnen Datenverbindungen.

Vorzugsweise weist die Basisstation eine separate Schnittstelle für Sprachkommunikation auf, die beispielsweise mit V5-Protokoll arbeitet. Diese Schnittstelle kann mit einem externen Telekommunikationsnetz zur Sprachübertragung verbunden sein. Durch diese Architektur wird erreicht, daß der Datenverkehr (IP-Protokoll) von der Sprachkommunikation getrennt wird und so Wählverbindungen durch auftretende hohe Datenströme der Datenverbindung nicht blockiert werden.

Vorzugsweise ist die Übertragungsrate zwischen der Basisstation und einer Teilnehmerstation in Schritten von zum Beispiel 64 kbit/s variabel wählbar.

Der Basisstations-Router kann mehrere 2 Mbit/s-Schnittstellen und/oder eine Ethernet-Schnittstelle zu einem externen Kommunikationsnetz, wie beispielsweise einem Internet-Service-Provider, aufweisen.

Die Datenübertragung zwischen Basisstation und einer Teilnehmerstation kann dabei beispielsweise mittels des ITU-G.704-Protokoll über eine HDSL-Verbindung über Festnetz oder per Funk erfolgen.

Am Teilnehmerstations-Router ist vorzugsweise eine Ethernet-Schnittstelle zum Anschluß an LAN (Local Area Network)-Endgeräte vorhanden. Die Teilnehmerstation weist vorzugsweise weitere Schnittstellen für Sprachkommunikation (U, S0, a/b) und Leased Lines (LL) auf.

### Zeichnung

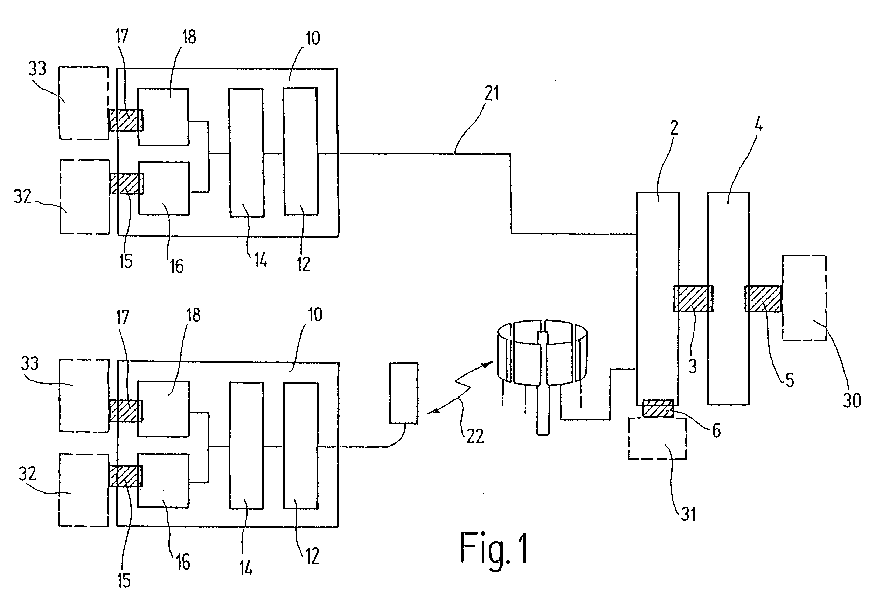

Die Erfindung wird im folgenden anhand von Ausführungsbeispielen unter Bezugnahme auf die beiliegende Zeichnung im Detail erläutert, die ein schematisches Blockschaltbild einer Konfiguration des erfindungsgemäßen Telekommunikationssystems zeigt.

### Beschreibung von Ausführungsbeispielen

Die einzige Figur zeigt in einem schematischen Blockschaltbild eine beispielhafte Konfiguration eines erfindungsgemäßen Telekommunikationssystems.

Zentrales Bauteil der Konfiguration ist eine Basisstation 2, die über eine Schnittstelle 3 mit einem Basisstations-Router 4 gekoppelt ist. Die Basisstation 2, auch Central Distribution Node genannt, ist eine zentrale Datenverarbeitungs- und Recheneinheit zur Steuerung einer Vielzahl von eingehenden und ausgehenden Kommunikationsverbindungen. Als Basisstation 2 kann ein Gerät vom Typ MSV5 verwendet werden.

In der Figur auf der linken Seite erkennbar sind zwei exemplarisch dargestellte Teilnehmerstationen 10. Diese weisen jeweils ein Modem 12 oder dergleichen zum Anschluß an eine Telekommunikationsverbindung 21, 22, eine Zentraleinheit 14, eine Benutzereinheit 18 sowie einen Teilnehmerstations-Router 16 auf. Die Benutzereinheit 18 weist eine Sprachkommunikations-Schnittstelle 17 auf, an der analoge wie auch digitale Endgeräte wie Telefone, Telefaxgeräte und dergleichen angeschlossen werden können (U, S0, a/b und LL-Schnittstellen). Am Teilnehmerstations-Router 16 ist eine Ethernet-Schnittstelle 15 angebracht, die eine Verbindung zu LAN (Local Area Network)-Endgeräten wie vernetzten PCs oder dergleichen herstellt.

Das Anschlußnetzwerk zwischen Basisstation 2 und den Teilnehmerstationen 10, kann, wie in der Figur schematisch dargestellt ist, über Festnetz 21 oder per Funkverbindung 22 realisiert werden. Es kann sich dabei um eine 2 Mbit/s-Verbindung gemäß Rahmenaufbau G.704 der Internationalen Telekommunikations-Union (ITU), um ein SDH (Synchronous Digital Hierarchy)-Netz oder eine Punkt-zu-Multipunkt-Funkverbindung vom Typ DMS (Digital Multiport System) handeln.

Die Basisstation 2 ist über die Schnittstelle 3 mit dem Basisstations-Router 4 verbunden. Dieser hat die Aufgabe, die Datenverbindung zu den in den Teilnehmerstationen 10 vorhandenen Teilnehmerstations-Routern 16 zu steuern. Die Schnittstelle 3 besteht vorzugsweise aus einer Anzahl von 2 Mbit/s-Schnittstellen gemäß dem Protokoll V5.2 nach ETS 300 347 entsprechend ITU G.965. Schnittstellen, die mit diesem Protokoll arbeiten, werden bisher nur für Analog- und ISDN-Vermittlungen verwendet. Der Einsatz einer derartigen Schnittstelle für den Basisstations-Router 4 ermöglicht es, die Kapazität der Datenverbindung zwischen Basisstation und Teilnehmerstationen auf ähnliche Weise wie bei einer Sprachverbindung zu steuern, beispielsweise in 64 kbit/s-Schritten zwischen einer Mindestkapazität von 64 kbit/s und einer maximalen Kapazität von 2 Mbit/s je Datenverbindung. Die jeweiligen 64 kbit/s-Zeitschlitze einer 2 Mbit/s-Verbindung können mittels des Basisstations-Routers 4 einzeln und dynamisch auf die Leitungen zu den jeweiligen Teilnehmerstationen 10 verteilt werden.

Der Basisstations-Router 4 verhält sich in bezug auf die Bandbreitenzuteilung identisch wie beispielsweise eine ISDN-Vermittlung. Der Aufbau beziehungsweise Abbau eines 64 kbit/s-Zeitschlitzes erfolgt entsprechend dem Auf- beziehungsweise Abbau eines ISDN-Kanals. Innerhalb des Systems verhält sich der Verkehr zwischen Basisstations-Router 4 und Teilnehmerstations-Router 16 gleich wie ISDN-Verkehr. Durch die Verwendung des V5.2-Protokolls führt der Basisstations-Router auch eine Konzentration aus. So ist es möglich, beispielsweise 100 Teilnehmerstations-Router 16 auf einen Basisstations-Router 4 zu schalten. Obwohl der Basisstations-Router 4 beispielsweise nur 4 x 2-Mbit/s-Schnittstellen zur Versorgung der Teilnehmerstationen hat, kann trotzdem jeder der 100 Teilnehmerstations-Router 16 kurzzeitig eine maximale Kapazität von 30 x 64 kbit/s haben, wodurch auch große Datenmengen schnell transferiert werden können. Durch diese Konzentrationsfunktion des Basisstations-Routers 4 wird die zum POP (Point of Presence) abzutransportierende Kapazität minimiert.

Die Architektur des erfindungsgemäßen Telekommunikationssystems ermöglicht es so, daß vom Netz durch die Funktion des über die V5.2-Schnittstelle mit der Basisstation 2 verbundenen Basisstations-Routers 4 bei einem ISDN-Primärmultiplexanschluß (PRA) dem jeweiligen Teilnehmerstations-Router 16 jeweils nur die tatsächlich benötigte Übertragungsrate auf Anfrage zur Verfügung gestellt wird. Gegenüber den bisher für den Datenverkehr üblichen Verbindungen mit fester Übertragungskapazität (Leased Lines) ergibt sich so eine wesentlich verbesserte Flexibilität und kosteneffizientere Ausnutzung der Leitungsressourcen sowie der Vermittlungsressourcen.

Bei dieser Architektur werden für den Verbindungsaufbau zwischen einem Teilnehmerstations-Router 16 und dem Basisstations-Router 4 und umgekehrt die Mechanismen von ISDN-PRA bei V5.2 benutzt, d.h. der Teilnehmerstations-Router wählt sich über ISDN-PRA im D-Kanal, der transparent im Anschlußnetzwerk übertragen wird, in den Basisstations-Router ein. Das V5-Modul im Basisstations-Router veranlaßt die Basisstation 2, die gewünschte Übertragungskapazität zu schalten. Die Datenströme nach Internet-Protokoll (IP) werden transparent durch das Anschlußnetzwerk 21, 22 übertragen.

Die Basisstation 2 weist vorzugsweise eine separate Schnittstelle 6, beispielsweise eine V5-Schnittstelle zur Verbindung mit einem Telefonnetz 31 für Sprachkommunikation auf. Der Basisstations-Router 4 kann wiederum über eine Ethernet-Schnittstelle 5 mit einem Internet-Service-Provider 30 verbunden sein. Dadurch werden die IP-Datenströme unabhängig von der Schnittstelle 6 für Sprachkommunikation direkt über den Basisstations-Router 4 ins IP-Netz geleitet. Dadurch ist sichergestellt, daß die für Wählverbindungen ausgelegte Schnittstelle 6 nicht durch die IP-Datenströme blockiert wird.

Das erfindungsgemäß Telekommunikationssystem und das erfindungsgemäße Verfahren zur Datenübertragung kann für eine Datenverbindung zwischen Basisstation und Teilnehmerstation die jeweils momentan erforderliche Übertragungskapazität, beispielsweise durch Ausnutzung eines DBA (Dynamik Bandwidth Allocation)-Algorithmus zur Verfügung gestellt werden. Die verfügbare Übertragungsbandbreite, beispielsweise auf Richtfunkstrecken, wird dadurch effektiver und kostengünstiger eingesetzt. Die Trennung von Datenverkehr und Sprachkommunikation in der Basisstation ermöglicht eine Entlastung der Schnittstelle 6 zum Telefonnetz von den IP-Datenströmen.

## Patentansprüche

1. Telekommunikationssystem aufweisend:
eine Basisstation (2), mindestens einen der Basisstation (2) zugeordneten Basisstations-Router (4), mehrere über ein Anschlussnetzwerk (21, 22) mit der Basisstation (2) verbundene Teilnehmerstationen (10) mit jeweiligen Teilnehmerstations-Routern (16) zum Aufbau einer Telekommunikationsverbindung mit dem Basisstations-Router (4), wobei der Basisstations-Router (4) ausgebildet ist, die einer Telekommunikationsverbindung zwischen Basisstation (2) und Teilnehmerstation (10) jeweils zugewiesene variable Übertragungsrate dynamisch zu steuern und zu konzentrieren, indem die Übertragungsrate den Teilnehmerstationen (10) gemäß der zwischen Basisstation (2) und Basisstations-Router (4) verfügbaren Bandbreite dynamisch zugewiesen wird.

2. Telekommunikationssystem nach Anspruch 1, **dadurch gekennzeichnet, daß** zum Verbindungsaufbau zwischen Basisstation (2) und Teilnehmerstation (10) der Basisstations-Router (4) vom Teilnehmerstations-Router (16) anwählbar ist.

3. Telekommunikationssystem nach Anspruch 2, **dadurch gekennzeichnet, daß** die Anwahl über einen ISDN-Primärmultiplexanschluß (PRA) erfolgt.

4. Telekommunikationssystem nach einem der Ansprüche 1 bis 3, **dadurch gekennzeichnet, daß** die Basisstation (2) mit den Basisstations-Router (4) über eine Schnittstelle (5) mit V5.2-Protokoll verbunden ist.

5. Telekommunikationssystem nach einem der Ansprüche 1 bis 4, **dadurch gekennzeichnet, daß** die Basisstation (2) eine separate Schnittstelle (6) für Sprachkommunikation aufweist.

6. Telekommunikationssystem nach Anspruch 5, **dadurch gekennzeichnet, daß** die separate Schnittstelle (6) mit V5-Protokoll arbeitet.

7. Telekommunikationssystem nach einem der Ansprüche 1 bis 6, **dadurch gekennzeichnet, daß** die Übertragungsrate zwischen Basisstation (2) und einer Teilnehmerstation (10) in Schritten von 64 kbit/s variabel ist.

8. Telekommunikationssystem nach einem der Ansprüche 1 bis 7, **dadurch gekennzeichnet, daß** der Basisstations-Router (4) mehrere 2 Mbit/s-Schnittstellen und/oder eine Ethernet-Schnittstelle (5) zu einem externen Kommunikationsnetz (30) aufweist.

9. Telekommunikationssystem nach einem der Ansprüche 1 bis 8, **dadurch gekennzeichnet, daß** die Datenübertragung zwischen Basisstation (2) und einer Teilnehmerstation (10) mittels G.704-Rahmenaufbau der Internationalen Telekommunikations-Union (ITU) erfolgt.

10. Telekommunikationssystem nach einem der Ansprüche 1 bis 9, **dadurch gekennzeichnet, daß** die Datenübertragung zwischen der Basisstation (2) und einer Teilnehmerstation (10) mittels Funkübertragung erfolgt und die Datensignale in der Luft zu einem Punkt-zu-Multipunktsystem konzentriert werden.

11. Telekommunikationssystem nach einem der Ansprüche 1 bis 9, **dadurch gekennzeichnet, daß** die Datenübertragung zwischen der Basisstation (2) und einer Teilnehmerstation (10) über Lichtwellenleiter erfolgt.

12. Telekommunikationssystem nach einem der Ansprüche 1 bis 9, **dadurch gekennzeichnet, daß** die Datenübertragung zwischen der Basisstation (2) und einer Teilnehmerstation (10) über eine HDSL-Verbindung erfolgt.

13. Telekommunikationssystem nach einem der Ansprüche 1 bis 9, **dadurch gekennzeichnet, daß** die Datenübertragung zwischen der Basisstation (2) und einer Teilnehmerstation (10) über eine SDH (Scnchronous Digital Hierarchy)-Verbindung erfolgt.

14. Telekommunikationssystem nach einem der Ansprüche 1 bis 13, **dadurch gekennzeichnet, daß** am Teilnehmerstations-Router (16) eine Ethernet-Schnittstelle (15) vorhanden ist.

15. Telekommunikationssystem nach einem der Ansprüche 1 bis 14, **dadurch gekennzeichnet, daß** an den Teilnehmerstationen (10) Schnittstellen (17) für Sprachkommunikation vorhanden sind.

16. Verfahren zur Datenübertragung zwischen einer Basisstation (2) und mehreren Teilnehmerstationen (10), wobei der Basisstation (2) ein Basisstations-Router (4) zugeordnet ist und die Teilnehmerstationen (10) einen Teilnehmerstations-Router (16) zum Aufbau einer Telekommunikationsverbindung mit dem Basisstations-Router (4) aufweisen, und wobei der Basisstations-Router (4) die einer Telekommunikationsverbindung zwischen Basisstation (2) und einer Teilnehmerstation (10) zugewiesene variable Datenübertragungsrate dynamisch steuert und konzentriert, indem er die Übertragungsrate den Teilnehmerstationen (10) gemäß der zwischen Basisstation (2) und Basisstations-Router (4) verfügbaren Bandbreite dynamisch zuweist.

## Claims

1. A telecommunication system comprising: a base station (2), at least one base station router (4) associated with the base station (2), a plurality of subscriber stations (10) connected to the base station (2) via an access network (21, 22) and having respective subscriber station routers (16) for the setting up of a telecommunication link with the base station router (4), wherein the base station router (4) is designed to dynamically control and to concentrate the variable transfer rate in each case assigned to a telecommunication link between the base station (2) and the subscriber station (10) in that the transfer rate is dynamically assigned to the subscriber stations (10) in accordance with the bandwidth available between the base station (2) and the base station router (4).

2. A telecommunication system in accordance with claim 1, **characterised in that** the base station router (4) can be called by the subscriber station router (16) for the setting up of a link between the base station (2) and the subscriber station (10).

3. A telecommunication system in accordance with claim 2, **characterised in that** the call takes place via an ISDN primary multiplex connection (PRA).

4. A telecommunication system in accordance with any one of the claims 1 to 3, **characterised in that** the base station (2) is connected to the base station router (4) via an interface (5) with the V5.2 protocol.

5. A telecommunication system in accordance with any one of the claims 1 to 4, **characterised in that** the base station (2) has a separate interface (6) for voice communication.

6. A telecommunication system in accordance with claim 5, **characterised in that** the separate interface (6) works with the V5 protocol.

7. A telecommunication system in accordance with any one of the claims 1 to 6, **characterised in that** the transfer rate between the base station (2) and a subscriber station (10) is variable in steps of 64 kbit/ s.

8. A telecommunication system in accordance with any one of the claims 1 to 7, **characterised in that** the base station router (4) has a plurality of 2 Mbit/s interfaces and/or an Ethernet interface (5) to an external communication network (30).

9. A telecommunication system in accordance with any one of the claims 1 to 8, **characterised in that** the data transfer between the base station (2) and a subscriber station (10) takes place by means of a G.704 frame structure of the International Telecommunication Union (ITU).

10. A telecommunication system in accordance with any one of the claims 1 to 9, **characterised in that** the data transfer between the base station (2) and a subscriber station (10) takes place by means of radio transmission and the data signals are concentrated in the air to a point-to-multipoint system.

11. A telecommunication system in accordance with any one of the claims 1 to 9, **characterised in that** the data transfer between the base station (2) and a subscriber station (10) takes place via optical waveguides.

12. A telecommunication system in accordance with any one of the claims 1 to 9, **characterised in that** the data transfer between the base station (2) and a subscriber station (10) takes place via an HDSL connection.

13. A telecommunication system in accordance with any one of the claims 1 to 9, **characterised in that** the data transfer between the base station (2) and a subscriber station (10) takes place via an SDH (synchronous digital hierarchy) connection.

14. A telecommunication system in accordance with any one of the claims 1 to 13, **characterised in that** an Ethernet interface (15) is present at the subscribe station router (16).

15. A telecommunication system in accordance with any one of the claims 1 to 14, **characterised in that** interfaces (17) for voice communication are present at the subscriber stations (10).

16. A method for data transfer between a base station (2) and a plurality of subscriber stations (10), wherein a base station router (4) is associated with the base station (2) and the subscriber stations (10) have a subscriber station router (16) for the setting up of a telecommunication link with the base station router (4), and wherein the base station router (4) dynamically controls and concentrates the variable data transfer rate assigned to a telecommunication link between the base station (2) and a subscriber station (10) in that it dynamically assigns the transfer rate to the subscriber stations (10) in accordance with the bandwidth available between the base station (2) and the base station router (4).

## Revendications

1. Système de télécommunications présentant :
une station de base (2), au moins un routeur de station de base (4) associé à la station de base (2), plusieurs stations d'usagers (10) reliées à la station de base (2) par un réseau de connexion (21, 22), avec des routeurs de station d'usagers (16) respectifs pour établir une liaison de télécommunications avec le routeur de station de base (4), le routeur de station de base (4) étant réalisé de manière à commander dynamiquement et à concentrer la vitesse de transmission variable assignée à une liaison de communication respective entre la station de base (2) et la station d'usager (10), en assignant la vitesse de transmission aux stations d'usagers (10) selon la largeur de bande disponible entre la station de base (2) et le routeur de station de base (4).

2. Système de télécommunications selon la revendication 1, **caractérisé en ce que** pour établir la liaison entre la station de base (2) et la station d'usager (10), le routeur de station de base (4) peut être sélectionné par le routeur de station d'usager (16).

3. Système de télécommunications selon la revendication 2, **caractérisé en ce que** la sélection a lieu via un accès multiplex primaire ISDN (PRA).

4. Système de télécommunications selon l'une des revendications 1 à 3, **caractérisé en ce que** la station de base (2) est reliée au routeur de station de base (4) via une interface (5) avec protocole V5.2.

5. Système de télécommunications selon l'une des revendications 1 à 4, **caractérisé en ce que** la station de base (2) présente une interface (6) séparée pour la communication vocale.

6. Système de télécommunications selon la revendication 5, **caractérisé en ce que** l'interface (6) séparée travaille avec le protocole V5.

7. Système de télécommunications selon l'une des revendications 1 à 6, **caractérisé en ce que** la vitesse de transmission entre la station de base (2) et une station d'usager (10) est variable par incréments de 64 kbits/s.

8. Système de télécommunications selon l'une des revendications 1 à 7, **caractérisé en ce que** le routeur de station de base (4) présente plusieurs interfaces de 2 Mbit/s et/ou une interface éthernet (5) vers un réseau de communication externe (30).

9. Système de télécommunications selon l'une des revendications 1 à 8, **caractérisé en ce que** la transmission de données entre la station de base (2) et une station d'usager (10) a lieu au moyen de la structure de trames G.704 de l'Union Internationale des Télécommunications (ITU).

10. Système de télécommunications selon l'une des revendications 1 à 9, **caractérisé en ce que** la transmission de données entre la station de base (2) et une station d'usager (10) a lieu par transmission radio et les signaux de données sont concentrés dans l'air en un système de point à multipoint.

11. Système de télécommunications selon l'une des revendications 1 à 9, **caractérisé en ce que** la transmission de données entre la station de base (2) et une station d'usager (10) a lieu via des guides d'ondes optiques.

12. Système de télécommunications selon l'une des revendications 1 à 9, **caractérisé en ce que** la transmission de données entre la station de base (2) et une station d'usager (10) a lieu via une liaison HDSL.

13. Système de télécommunications selon l'une des revendications 1 à 9, **caractérisé en ce que** la transmission de données entre la station de base (2) et une station d'usager (10) a lieu via une liaison SDH (hiérarchie numérique synchrone).

14. Système de télécommunications selon l'une des revendications 1 à 13, **caractérisé en ce qu'**une interface éthernet (15) est prévu sur le routeur de station d'usager (16).

15. Système de télécommunications selon l'une des revendications 1 à 14, **caractérisé en ce que** des interfaces éthernet (15) pour communication vocale sont prévues sur les stations d'usagers (10).

16. Procédé de transmission de données entre une station de base (2) et plusieurs stations d'usagers (10), un routeur de station de base (4) étant associé à la station de base (2) et les stations d'usagers (10) présentant un routeur de station d'usager (16) pour établir une connexion de télécommunications avec le routeur de station de base (4), et le routeur de station de base (4) commandant dynamiquement et concentrant la vitesse de transmission variable assignée à une liaison de communication entre la station de base (2) et une station d'usager (10), en assignant la vitesse de transmission aux stations d'usagers (10) selon la largeur de bande disponible entre la station de base (2) et le routeur de station de base (4).
